# NEUE EUROPÄISCHE PATENTSCHRIFT

(11) **EP 1 187 855 B2**
(45) Veröffentlichungstag und Bekanntmachung des Hinweises auf die Entscheidung über den Einspruch: **28.09.2011**
(45) Hinweis auf die Patenterteilung: 21.02.2007
(21) Anmeldenummer: 00931189.5
(22) Anmeldetag: 11.05.2000
(51) Int. Cl.: C08F 6/00, C08F 10/00

(54) **VERFAHREN ZUM TROCKNEN UND ENTGASEN VON ETHYLEN-COPOLYMEREN UND NACH DIESEM VERFAHREN HERGESTELLTES ETHYLEN-COPOLYMER**
METHOD FOR DRYING AND DEGASSING ETHYLENE COPOLYMERS
PROCEDE DE SECHAGE ET DE DEGAZAGE D'ETHYLENE COPOLYMERES ET ETHYLENE COPOLYMERE PREPARE SELON LEDIT PROCEDE

(30) Priorität: 18.05.1999 DE 19922677
(43) Veröffentlichungstag der Anmeldung: 20.03.2002
(73) Patentinhaber: Basell Polyolefine GmbH, 50389 Wesseling (DE)
(72) Erfinder: WITT, Michael, D-67246 Dirmstein (DE); DE LANGE, Paulus, D-50389 Wesseling (DE); PERNER, Thomas, D-76879 Effingen (DE); DECKERS, Andreas, D-55234 Flomborn (DE); EVERTZ, Kaspar, 65843 Sulzbach/Taunus (DE); LILGE, Dieter, D-67117 Limburgerhof (DE)
(86) Internationale Anmeldenummer: PCT/EP2000/004259
(87) Internationale Veröffentlichungsnummer: WO 2000/069919

(56) Entgegenhaltungen:
- EP-A- 0 683 176
- EP-A- 0 838 261
- EP-A1- 0 440 838
- EP-A2- 0 341 540
- DD-A3- 131 824
- US-A- 4 338 424

## Beschreibung

Die vorliegende Erfindung betrifft ein Verfahren zum Trocknen und Entgasen von Ethylen-Copolymeren , bei dem das den Polymerisationsreaktor verlassende Polymerisationsgut in einem Entspannbehälter entspannt wird und dann mit Ethylen als Entgasungsmedium in Kontakt gebracht wird.

Die Erfindung bezieht sich grundsätzlich auf alle technisch möglichen Verfahrensvarianten der Olefinpolymerisation, wie Suspensionspolymerisation, Gasphasentechnologie, Lösungspolymerisation und Kombinationen derselben (Kaskadentechnologie).

Das feste Polymerisationsgut, das nach der Polymerisationsreaktion erhalten wird, enthält üblicherweise noch bestimmte Mengen an nicht verbrauchten Ausgangsmaterialien und an Lösungsmitteln, die bei der Polymerisation eingesetzt wurden, als Verunreinigungen. Die aus Sicherheits-, Umwelt- und organoleptischen Gründen notwendige Trocknung und Entgasung des Polymerisationsgutes bedeutet im allgemeinen einen hohen Aufwand, da insbesondere höher siedende Comonomere nur langsam und damit kostenaufwendig zu entfernen sind.

Ein bekanntes Verfahren zur Entgasung besteht darin, als Entgasungsmedium direkt Ethylen einzusetzen, da auf diese Weise geschlossene Kreisläufe zum Polymerisationsreaktor möglich sind. So beschreibt die EP-A-0 341 540 ein Verfahren, bei dem das Reaktionsgemisch nach Druckreduzierung in eine gasförmige und eine feste Phase aufgetrennt wird. Die feste Phase wird dann zunächst kontinuierlich mit gasförmigem Ethylen vorgespült und in einem zweiten Schritt mit N₂/H₂O nachgespült. Eine Nachpolymerisation wird in dieser Schrift nicht erwähnt, sondern es wird die gleiche Entgasungseffizienz wie mit Inertgas beschrieben. Nachteiligerweise zeigte sich aber bei einem Praxisversuch, dass das aus dieser Literaturstelle bekannte Verfahren zu einer erheblichen Stippenbildung durch die Anwesenheit des Ethylens führen kann.

Der direkte Einbau von nicht verbrauchten Ausgangsmaterialien, insbesondere der höhersiedenden Comonomere, in das Polymerprodukt vor einer Deaktivierung der Katalysatoren wird in der EP-A-0 801 081 explizit erwähnt. Zur Entgasung wird neben Inertgas zusätzlich ein Ethylen/Wasserstoffgemisch eingesetzt und es wird als besonders vorteilhaft herausgestellt, dass durch die Nachpolymerisation Wärmeenergie freigesetzt wird, mit deren Hilfe die Entgasung beschleunigt wird.

Ein weiteres Verfahren beschreibt die EP-A-0 728 772 für Gasphasenreaktoren.

Dabei wird das Produkt, wie bisher üblich, durch Öffnung eines im Polymerisationsreaktor befindlichen Ventils ausgetragen. Das Produkt wird aber nicht direkt in den Entspannbehälter befördert, sondern zunächst in einen sogenannten Zwischenbehälter überführt, der über Ventilschaltungen anschließend wieder verschlossen wird, und wo bei weitgehend identischen Temperatur- und Druckverhältnissen wie im eigentlichen Reaktor eine Nachpolymerisation stattfindet. Das Problem bei diesem Verfahren ist, dass der Zwischenbehälter sich leicht verstopft und dass aus dem Polymerisationsreaktor zunächst die übliche Wirbefbettdichte ausgeschleust wird, d. h. pro Produktmasseneinheit eine große Menge an komprimiertem Reaktorgas mit ausgetragen wird. Hinzu kommt, daß durch den abgeschlossenen Reaktionsraum das enthaltene Monomergemisch zunächst an Ethylen verarmt und somit tendenziell niederdichtes Polymer gebildet wird. Durch den abgeschlossenen Polymerisationsraum ist der Anteil an hier gebildetem Polymer jedoch zu vernachlässigen und zeigt damit keine signifikante Beeinflussung der Produkteigenschaften.

Auch die EP-B 127 253 beschreibt bereits ein Verfahren zum Trocknen und Entgasen von Polyolefinen, bei dem als Entgasungsmedium das zu polymerisierende Monomer eingesetzt wird. Allerdings erfolgt dort keine Polymerisation im Entgasungsbehälter, sondern das Gemisch aus desorbierten und als Entgasungsmedium dienenden Monomeren wird in den Polymerisationsreaktor zurückgeleitet, wo dann die Polymerisation erfolgt. Einen Hinweis auf die besondere Verfahrensführung nach der vorliegenden Erfindung konnte der Fachmann dieser Literaturstelle nicht entnehmen.

Aus der EP 683 176 ist ein Verfahren bekannt, bei dem das Polymerisationsgut entspannt und in einem Entspannbehälter mit dem Reaktionsgas aus dem Reaktor gespült wird. Das Spülgas wird anschließend in den Kreisgasstrom der Polymerisationsanlage zurückgeführt.

Die Aufgabe der vorliegenden Erfindung bestand darin, ein Verfahren zum Trocknen und Entgasen von festem Polyolefin anzugeben, bei dem die Effektivität der Trocknung oder Entgasung durch einen gezielten Einsatz von Nachpolymerisation im Entspannbereich gesteigert wird und gleichzeitig durch die Nachpolymerisation im Entgasungsschritt die Polymereigenschaften ganz gezielt beeinflusst werden können.

Gelöst wird diese Aufgabe durch ein Verfahren zum trocknen und entgasen von Ethylen-Copolymeren aus Olefinen mit bis zu 20 C-Atomen, wobei als Monomere auch cyclische Olefine wie Cyclopenten oder Norbornen eingesetzt werden können, dessen Kennzeichenmerkmal darin zu sehen ist, dass als Entgasungsmedium Ethylen eingesetzt wird, das in einem Kreislaufprozess durch den Entspannbehälter strömt und vorzugsweise einer Temperaturregelung unterworfen wird, und dass in dem Entspannbehälter eine Polymerisation in einer Menge von bis zu 10 %, bezogen auf den gesamten Polymerisationsumsatz, erfolgt, wobei im Entspannbehälter ein niedermolekulares und comonomerarmes Polymer, bezogen auf die Molmasse und den Comonomereinbau des Polymers, das den Polymerisationsreaktor verlässt, gebildet wird und der Gehalt an Comonomeren im Polymerisationsgut reduziert wird und die Temperatur im Entspannbehälter höher eingestellt wird als die Temperatur im Reaktor.

Die Temperaturverhältnisse innerhalb des Entspannbehälters werden den Anforderungen insofern angepaßt, als die Temperatur üblicherweise 5 bis 10 K oberhalb der im Polymerisationsreaktor herrschenden Temperatur liegt.

Durch das erfindungsgemäße Verfahren kann ein Teil oder sogar die Gesamtmenge des insgesamt benötigten Olefin Ausgangsmaterials über den Weg des Entspannbehälters in den Prozess eingeschleust werden. Eine Gas-Trenneinheit ist demzufolge erfindungsgemäß nicht notwendig.

In einer besonders bevorzugten Ausführungsform des erfindungsgemäßen Verfahrens wird als Entspannbehälter ein Wirbelschichtreaktor eingesetzt. Die Nutzung eines solchen Wirbelschichtreaktors im Entgasungsbereich ist an sich bekannt: So wird in der WO-A-93/13843 geheiztes Kohlenwasserstoffgas als "stripping-Gas" verwendet.

In der US-A-4,424, 341 wird eine sukzessive Druckreduktion im Downstreambereich beschrieben. Ziel ist, den verdampften Anteil an Suspensionsmittel durch einfache Kühlung wieder verflüssigen zu können. Der erste Entspannbehälter wird nach der Lehre dieser Literaturstelle als Wirbelschicht betrieben.

Nach dem erfindungsgemäßen Verfahren lassen sich Ethylen-Copolymeren aus Olefinen mit zu bis 20 C-Atomen, vorzugsweise mit zu bis 10 C-Atomen, herstellen. Als Monomere können auch cyclische Olefine wie Cyclopenten oder Norbomen eingesetzt werden. Der Begriff Ethylen-Copolymeren soll im Rahmen der vorliegenden Erfindung auch Copolymere aus Monomeren mit einer unterschiedlichen Anzahl von C-Atomen umfassen. Besonders bevorzugt läßt sich erfindungsgemäß Polyethylen (PE) herstellen.

Zusammenfassend übernimmt erfindungsgemäß das im Entgasungsbehälter eingeschleuste Ethylen gleichzeitig mehrere Funktionen:
1. Es stellt eine Komponente des Entgasungsmediums dar, die sowohl bei der Suspensionstechnologie als auch beim Wirbelschichtverfahren im geschlossenen Rückgaskreislauf verbleiben kann. Stickstoff beispielsweise müßte aufwendig ausgeschleust werden, d.h. der Gasstrom müsste durch aufwendige Operationen wieder in seine Einzelkomponenten aufgetrennt werden.
2. Durch die Nachpolymerisation im Entgasungsbehälter nimmt der Gehalt an hochsiedenden Comonomeren (z.B. Hexen) ab, der Entgasungsaufwand wird dadurch gravierend vermindert.
3. Das in der Entgasungsstufe gebildete Polymer hat einen signifikanten Einfluß auf die Produkt- und/oder Verarbeitungseigenschaften. Durch Variation der Temperatur- und Druckverhältnisse im Entspannbehälter stehen Freiheitsgrade zur Anpassung der Produkteigenschaften (und der Reduzierung hochsiedender Comonomere) zur Verfügung.

Eine konkrete Anwendung des erfindungsgemäßen Verfahrens sind PE-Produkte der Dichte 0,94 g/cm³ mit einem HLMI (190°C/21,4 kg gemäss ISO 1133) von etwa 20, die u.a. für Rohrbeschichtungen und als Werkstoff für Kunststoffrohre eingesetzt werden. Ein sehr wichtiges Qualitätskriterium ist u.a. der sog. ESCR-Wert (Zeitstandniveau unter definierten Versuchsbedingungen). Es hat sich beispielsweise gezeigt, daß gute Ergebnisse dann erhalten werden, wenn das Polymer eine niedermolekulare Komponente enthält, die frei ist von Comonomer. Eine sehr geringe Menge an Comonomer, schon im Bereich weniger Prozentpunkte, hat bereits einen gravierenden Einfluß auf das ESCR-Niveau. Ein derartiges niedermolekulares PE wird üblicherweise als Wachs bezeichnet und kann z.B. bei der Granulierung auf einem Extruder oder Kneter eingearbeitet werden. Es resultiert ein typisches Blend-Produkt.

Ein alternativer Weg besteht in der Nutzung einer Kaskadentechnologie, bei der z.B. zuerst in einem ersten Reaktor ein Homopolymer mit einer niedrigen Molmasse erzeugt wird, das danach in einen zweiten Reaktor überführt wird, wo dann ein Polymer mit hoher Molmasse und hoher Comonomerkonzentration erzeugt wird.

Der erfindungsgemäße Weg führt über die gezielte Nachpolymerisation im Entgasungsbereich. Dabei wird ein Entspannbehälter eingesetzt und Ethylen zudosiert. Die Temperatur im Entspannbehälter ist höher als diejenige im Reaktor und wird vorzugsweise durch einen Regelmechanismus auf einen konstanten Wert im Bereich von 70 bis 135 °C mit einer Schwankungsbreite ΔT von maximal 2 K eingestellt, wodurch, in Abhängigkeit vom Polymerisationsverfahren und vom jeweils eingesetzten Katalysator, das gewünschte niedermolekulare und comonomerarme Polymer gebildet wird.

Nach dem vorstehend beschriebenen, erfindungsgemäßen Verfahren hergestelltes Polyethylen besitzt eine breite Molmassenverteilung, ausgedrückt durch ein hohes Verhältnis seines Gewichtsmittels (M_{w}) zu seinem Zahlenmittel (Mₙ), wie beschrieben in Hoffmann et al., Polymeranalytik, Georg Thieme Verlag, Stuttgart, (1977), Kap. 2.1.3 und 6.2.4.

Anhand der nachfolgend dargestellten Ausführungsbeispiele soll die Erfindung für den Fachmann noch besser verständlich und nachvollziehbar dargestellt werden.

### Beispiel 1 (erfindungsgemäß)

In einem Gasphasenwirbelschichtreaktor mit einem Gesamtvolumen von 0,18 m³ wurde Ethylen zusammen mit Hexen und Hexan (genaue Zusammensetzung: 50 Vol.-% Stickstoff, 3 Vol.-% Hexan, 0,25 Vol.-% Hexen, Rest von 46,75 Vol.-% Ethylen) bei einem Druck von 2 MPa (20 bar) und einer Temperatur von 110 °C in Gegenwart eines Chrom-Katalysators, der auf einen porösen SiO₂-Träger aufgezogen und über eine Zeitdauer von 2 h bei einer Temperatur von 700 °C aktiviert wurde, polymerisiert. Das rohe Polyethylen wurde dann aus dem Reaktor in einen Entspannbehälter überführt, in den gleichzeitig eine Menge von 10 Gew.-% Ethylen, bezogen auf die Gesamtmenge an ausgetragenem Polyethylen, zudosiert wurde. Der Druck in dem Entspannbehälter betrug 2000 hPa (entsprechend 1 bar Überdruck), die Temperatur 120 °C. Die Eigenschaften des Polyethylens und die Effizienz der Entgasung (C₆-KW Restbeladung) sind in der nachfolgenden Tabelle 1 den Ergebnissen des Vergleichsbeispiels gegenübergestellt.

### Vergleichsbeispiel:

Wie in Beispiel 1 wurde Polyethylen hergestellt, jedoch wurde der Entspannbehälter anstelle von Ethylen mit reinem Stickstoff gespült. Die Ergebnisse sind in der nachfolgenden Tabelle dargestellt.

**Tabelle:**

| | Beispiel 1 | Vergleichsbeispiel |
|---|---|---|
| C₆-KW Restbeladung am Entspannbehälter [ppm] | | |
| Einlauf | 1500 | 1500 |
| Auslauf | 100 | 300 |
| Dichte [g/cm³] | 0,938 | 0,935 |
| HLMI _{190°/21,4} [dg/min] | 22 | 20 |
| M_{w}/Mₙ | 15 | 11 |
| ESCR[h]* | 120 ± 10 | 90 ± 10 |

| | | |
|---|---|---|
| ^{*} Für die Bestimmung des ESCR Meßwertes wurden scheibenförmige Prüfkörper hergestellt, die einen Durchmesser von 38 cm und eine Dicke von 2 mm besaßen. Die Prüfkörper wurden einseitig mit einer zentrierten Kerbe versehen, die eine Länge von 20 mm und eine Tiefe von 200 µm besaß. Dann wurden die gekerbten Prüfkörper in einen ringförmigen Halter gespannt und beidseitig in eine Tensidlösung aus 5 % ^{®}Lutensol FSA (Verkaufsprodukt der BASF AG) bei einer Temperatur von 80 °C eingetaucht und mit einem Druck von 3 bar belastet. Die Zeit von der Druckbelegung bis zum Bruch des Plättchens wird mit einem elektronischen Druckwächter kontrolliert und automatisch gestoppt (Angabe in h). | | |

Aus fünf Messungen wird das arithmetische Mittel und die Standardabweichung ermittelt, wobei typische Standardabweichungen im Bereich bis maximal 10 % liegen. Messserien, die über 200 h andauern, werden abgebrochen und bei höherer Temperatur mit neuen Prüfkörpern wieder aufgenommen.

Die Färbung der Lutensol-Lösung wird täglich visuell überprüft und bei Abweichungen ausgewechselt. Der maximale Abstand zwischen zwei Wechseln beträgt 1 Monat. Das Lösungsmittelniveau in dem Wärmebad wird mittels eines äusseren Niveauregler ständig konstant gehalten und die Verdunstungsverluste durch demineralisiertes Wasser automatisch ausgeglichen.

## Patentansprüche

1. Verfahren zum Trocknen und Entgasen von Ethylen-Copolymeren aus Olefinen mit bis zu 20 C-Atomen, wobei als Monomere auch cyclische Olefine wie Cyclopenten oder Norbornen eingesetzt werden können, bei dem das einen Polymerisationsreaktor verlassende Polymerisationsgut in einem Entspannbehälter entspannt und dann mit einem Entgasungsmedium in Kontakt gebracht wird, **dadurch gekennzeichnet, dass** als Entgasungsmedium Ethylen eingesetzt wird, das in einem Kreislaufprozess durch den Entspannbehälter strömt, und dass in dem Entspannbehälter eine Polymerisation in einer Menge von bis zu 10 %, bezogen auf den gesamten Polymerisationsumsatz, erfolgt, wobei im Entspannbehälter ein niedermolekulares und comonomerarmes Polymer, bezogen auf die Molmasse und den Comonomereinbau des Polymers, das den Polymerisationsreaktor verlässt, gebildet wird und der Gehalt an Comonomeren im Polymerisationsgut reduziert wird und die Temperatur im Entspannbehälter höher eingestellt wird als die Temperatur im Reaktor.

2. Verfahren nach Anspruch 1, **dadurch gekennzeichnet, dass** das Entgasungsmedium, das in einem Kreislaufprozess durch den Entspannbehälter strömt, mit Ethylen einer Temperaturregelung unterworfen wird.

3. Verfahren nach Anspruch 1 oder 2, **dadurch gekennzeichnet, dass** als Entspannbehälter eine Wirbelschicht eingesetzt wird.

4. Verfahren nach einem der Ansprüche 1 bis 3, **dadurch gekennzeichnet, dass** Ethylen-Copolymere aus Olefinen mit bis zu 10 C-Atomen, hergestellt werden.

5. Verfahren nach einem der Ansprüche 1 bis 4, **dadurch gekennzeichnet, dass** Ethylen-Copolymere mit einer Dichte im Bereich von 0,90 bis 0,96 g/cm³ hergestellt werden.

6. Verfahren nach einem der Ansprüche 1 bis 5, **dadurch gekennzeichnet, dass** Temperatur- und Druckverhältnisse innerhalb des Entspannbehälters den Anforderungen entsprechend angepaßt werden und im Bereich von 70 bis 135 °C und 1200 bis 3000 hPa (entsprechend 0,2 bis 2,0 bar Überdruck) liegen.

7. Ethylen-Copolymere hergestellt nach einem Verfahren gemäß einem der Ansprüche 1 bis 6, **dadurch gekennzeichnet, dass** sieeine Molmassenverteilung, ausgedrückt durch das Verhältnis von M_{w} zu Mₙ von ≥ 15 aufweisen.

## Claims

1. A method for drying and degassing ethylene copolymers prepared from olefins with up to 20 C atoms, it also being possible to use cyclic olefins such as cyclopentene or norbornene as monomers, in which the polymerisation product leaving a polymerisation reactor is depressurised in a depressurisation vessel and then brought into contact with a degassing medium, **characterised in that** the degassing medium used is ethylene which flows through the depressurisation vessel in a circulation process and **in that** polymerisation amounting to up to 10%, relative to total polymerisation conversion, proceeds in the depressurisation vessel, a low molecular weight and low-comonomer polymer, relative to the molar mass and copolymer incorporation of the polymer leaving the polymerisation reactor, being formed in the depressurisation vessel and the comonomer content in the polymerisation product being reduced and the temperature in the depressurisation vessel being set higher than the temperature in the reactor.

2. A method according to claim 1, **characterised in that** the degassing medium which flows through the depressurisation vessel in a circulation process is subjected to temperature regulation with ethylene.

3. A method according to claim 1 or claim 2, **characterised in that** a fluidised bed is used as the depressurisation vessel.

4. A method according to any one of claims 1 to 3, **characterised in that** ethylene copolymers are produced from olefins with up to 10 C atoms.

5. A method according to any one of claims 1 to 4, **characterised in that** ethylene copolymers with a density in the range from 0.90 to 0.96 g/cm³ are produced.

6. A method according to any one of claims 1 to 5, **characterised in that** temperature and pressure conditions within the depressurisation vessel are adapted to requirements and are in the range from 70 to 135°C and 1200 to 3000 hPa (corresponding to a gauge pressure of 0.2 to 2.0 bar).

7. Ethylene copolymers produced by a method according to any one of claims 1 to 6, **characterised in that** they have a molar mass distribution, expressed as the ratio of M_{w} to Mₙ of ≥ 15.

## Revendications

1. Procédé pour le séchage et le dégazage de copolymères d'éthylène à partir d'oléfines comprenant jusqu'à 20 atomes de carbone, où on peut également utiliser comme monomères des oléfines cycliques telles que le cyclopentène ou le norbornène, dans lequel le matériau de polymérisation quittant un réacteur de polymérisation est détendu dans un récipient de détente puis mis en contact avec un milieu de dégazage, **caractérisé en ce qu'**on utilise, comme milieu de dégazage, de l'éthylène, qui s'écoule, dans un procédé en circulation, dans le récipient de détente et **en ce qu'**une polymérisation a lieu dans le récipient de détente en une quantité allant jusqu'à 10%, par rapport à la conversion par polymérisation totale, un polymère de bas poids moléculaire plus bas et plus pauvre en comonomères, par rapport à la masse molaire et à l'incorporation de comonomère du polymère qui quitte le réacteur de polymérisation, étant formé dans le récipient de détente et la teneur en comonomères dans le matériau de polymérisation étant réduite et la température dans le récipient de détente étant réglée à une valeur plus élevée que la température dans le réacteur.

2. Procédé selon la revendication 1, **caractérisé en ce que** le milieu de dégazage, qui s'écoule dans un procédé en circulation dans le récipient de détente, est soumis avec de l'éthylène à une régulation de la température.

3. Procédé selon la revendication 1 ou 2, **caractérisé en ce qu'**une couche tourbillonnante est utilisée comme récipient de détente.

4. Procédé selon l'une quelconque des revendications 1 à 3, **caractérisé en ce que** des copolymères d'éthylène comprenant jusqu'à 10 atomes de carbone sont préparés.

5. Procédé selon l'une quelconque des revendications 1 à 4, **caractérisé en ce que** des copolymères d'éthylène présentant une densité dans la plage de 0,90 à 0,96 g/cm³ sont préparés.

6. Procédé selon l'une quelconque des revendications 1 à 5, **caractérisé en ce que** les rapports de température et de pression dans le récipient de détente sont adaptés de manière correspondante aux exigences et se situent respectivement dans la plage de 70 à 135°C et de 1200 à 3000 hPa (correspondant à une surpression de 0,2 à 2,0 bars).

7. Copolymères d'éthylène préparés selon un procédé selon l'une quelconque des revendications 1 à 6, **caractérisés en ce qu'**ils présentent une répartition des masses molaires, exprimée par le rapport de M_{w} à Mₙ, ≥ 15.
